# FASCICULE DE BREVET EUROPEEN

(11) **EP 3 430 242 B1**
(45) Date de publication et mention de la délivrance du brevet: **01.01.2025**
(21) Numéro de dépôt: 17714869.9
(22) Date de dépôt: 15.03.2017
(51) Int. Cl.: F01D 25/16, F02K 3/06, F02C 7/06, F02C 7/36

(54) **TURBORÉACTEUR AYANT UN GROUPE LUBRIFICATION DES PALIERS SIMPLIFIÉ**
MANTELSTROM-TRIEBWERK MIT EINER VEREINFACHTEN LAGERSCHMIEREINHEIT
TURBOJET ENGINE COMPRISING A SIMPLIFIED BEARING LUBRICATION UNIT

(30) Priorité: 15.03.2016 FR 1652161
(43) Date de publication de la demande: 23.01.2019
(73) Titulaire: Safran Aircraft Engines, 75015 Paris (FR)
(72) Inventeur: CUVILLIER, Romain, Guillaume, 77550 Moissy-Cramayel (FR); BORDONI, Nils, Edouard, Romain, 77550 Moissy-Cramayel (FR); BRAULT, Michel, Gilbert, Roland, 77550 Moissy-Cramayel (FR); DIEVART, Jérémy, 77550 Moissy-Cramayel (FR); KUBIAK, Guillaume Patrice, 77550 Moissy-Cramayel (FR); NEGRI, Arnaud, Nicolas, 77550 Moissy-Cramayel (FR); NOWAKOWSKI, Nathalie, 77550 Moissy-Cramayel (FR)
(74) Mandataire: Regimbeau
(86) Numéro de dépôt international: PCT/FR2017/050598
(87) Numéro de publication internationale: WO 2017/158296

(56) Documents cités:
- EP-A1- 2 975 226
- EP-A2- 1 396 611
- EP-A2- 1 703 085
- WO-A1-2013/141926
- FR-A1- 2 936 273
- US-A- 4 531 358
- US-A1- 2009 218 006
- US-A1- 2013 177 385
- US-A1- 2013 195 647
- US-A1- 2014 301 829
- US-A1- 2016 003 142
- US-B1- 8 402 741

## Description

### DOMAINE DE L'INVENTION

L'invention concerne le domaine général des turbomachines à double flux, et plus particulièrement des turbomachines ayant un taux de dilution élevé.

### ARRIERE-PLAN TECHNOLOGIQUE

Un turboréacteur à double flux comprend généralement, d'amont en aval dans le sens de l'écoulement des gaz, une soufflante carénée et logée dans un carter de soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire.

L'espace d'écoulement primaire traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

Typiquement, la turbine haute pression entraine en rotation le compresseur haute pression par l'intermédiaire d'un premier arbre, dit arbre haute pression, tandis que la turbine basse pression entraine en rotation le compresseur basse pression et la soufflante par l'intermédiaire d'un deuxième arbre, dit arbre basse pression. L'arbre basse pression est généralement logé dans l'arbre haute pression, lesdits arbres étant fixés aux parties structurales du turboréacteur par l'intermédiaire de paliers.

Afin d'améliorer le rendement propulsif du turboréacteur et de réduire sa consommation spécifique ainsi que le bruit émis par la soufflante, il a été proposé des turboréacteurs présentant un taux de dilution (« bypass ratio » en anglais, qui correspond au rapport entre le débit du flux secondaire (froid) et le débit du flux primaire (chaud, qui traverse le corps primaire)) élevé.

Pour atteindre de tels taux de dilution, la soufflante est découplée de la turbine basse pression, permettant ainsi d'optimiser indépendamment leur vitesse de rotation respective. Par exemple, le découplage peut être réalisé à l'aide d'un réducteur tel qu'un mécanisme de réduction épicycloïdal (« planetary gear reduction mecanism » en anglais) ou planétaire (« star gear reduction mecanism » en anglais), placé entre l'extrémité amont (par rapport au sens d'écoulement des gaz dans le turboréacteur) de l'arbre basse pression et la soufflante. La soufflante est alors entrainée par l'arbre basse pression par l'intermédiaire du mécanisme de réduction et d'un arbre supplémentaire, dit arbre de soufflante, qui est fixé entre le mécanisme de réduction et le disque de la soufflante.

Ce découplage permet ainsi de réduire la vitesse de rotation et le rapport de pression de la soufflante (« fan pressure ratio » en anglais), et d'augmenter la puissance extraite par la turbine basse pression. Grâce au mécanisme de réduction, l'arbre basse pression peut tourner à des vitesses de rotation plus élevées que dans les turboréacteurs conventionnels.

L'arbre haute pression est fixé aux parties structurales du moteur par l'intermédiaire d'un palier avant HP#1 et d'un palier arrière HP#2. Le palier avant HP#1 est habituellement monté sur l'arbre haute pression et sur le carter qui relie le compresseur basse pression et le compresseur haute pression (carter inter-compresseur). Le palier arrière HP#2 est quant à lui monté d'une part sur l'arbre haute pression et d'autre part sur le carter inter-turbine (c'est-à-dire sur le carter s'étendant entre le carter logeant la turbine haute pression et le carter logeant la turbine basse pression).

Un troisième palier HP#3 peut le cas échéant être prévu entre le palier avant HP#1 et le palier arrière HP#2.

L'arbre basse pression est généralement supporté par trois paliers BP#1, BP#2 et BP#3. Le premier palier BP#1 est situé le plus en amont de l'arbre basse pression et peut être monté d'une part sur l'arbre basse pression et d'autre part entre le mécanisme de réduction et le booster (sur le carter d' « entrée »). Le palier troisième BP#3, qui est situé le plus en aval de l'arbre basse pression, peut être monté sur l'arbre basse pression et sur le carter d'échappement du turboréacteur. La position des paliers BP#1 et BP#3 étant conventionnelle, elle ne sera pas davantage détaillée dans ce qui suit.

Le deuxième palier BP#2, qui est adjacent au palier troisième BP#3, peut être monté sur l'arbre basse pression et sur le carter inter-turbine, en amont de la turbine basse pression ou sur le carter d'échappement comme le palier BP#3. Dans une forme de réalisation, le deuxième palier BP#2 s'étend en aval du palier arrière HP#2.

L'arbre de la soufflante, qui est monté entre la sortie du mécanisme de réduction et le rotor de la soufflante, est en outre supporté par un palier amont S#1 disposé sous la soufflante et un palier aval S#2 disposé au niveau de l'entrée de l'espace d'écoulement secondaire, en amont du mécanisme de réduction.

Le turboréacteur comprend en outre un engrenage configuré pour prélever la puissance sur l'arbre haute pression. Cet engrenage est généralement placé en amont (et à proximité) du palier avant HP#1.

Ces différents paliers, le mécanisme de réduction et l'engrenage doivent être lubrifiés et refroidis. A cet effet, le turboréacteur comprend généralement un groupe de lubrification alimentant un circuit d'huile fermé, des enceintes dans lesquelles sont logés les paliers, le mécanisme de réduction et l'engrenage, des gicleurs configurés pour injecter de l'huile dans les enceintes et des pompes de récupération configurées pour recycler l'huile qui a été injectée dans les enceintes.

En pratique, chaque équipement (c'est-à-dire chaque palier et le mécanisme de réduction) est logé dans une enceinte respective à laquelle sont associés un ou plusieurs gicleurs et au moins une pompe de récupération d'huile.
Chaque enceinte comprend à cet effet des roulements interposés entre une bague interne et une bague externe coaxiales avec l'axe X du turboréacteur et sensiblement annulaires. La bague externe peut être fixe par rapport aux éléments structuraux du turboréacteur tandis que la bague interne est fixée sur des pièces tournantes du turboréacteur et donc mobile en rotation autour de son axe. En variante, les deux bagues sont tournantes. Les équipements logés dans les enceintes sont lubrifiés et refroidis par de l'huile qui est projetée dans l'enceinte par des gicleurs afin de former un brouillard de gouttelettes en suspension. Des moyens d'étanchéité sont prévus dans les zones où les bagues se rejoignent afin de permettre le passage d'un flux d'air dans le but de pressuriser l'enceinte et de retenir au maximum l'huile à l'intérieur de celle-ci. On prévoit par ailleurs une pompe de récupération d'huile par enceinte pour évacuer un volume d'huile équivalent à celui qu'on injecte dans l'enceinte via les gicleurs.

Lorsque l'enceinte loge un palier, le support dudit palier est par exemple fixé sur la bague externe de l'enceinte.

Une telle configuration permet ainsi de lubrifier et de refroidir efficacement ces équipements. Toutefois, les enceintes et les pompes de récupération ont un impact non négligeable sur l'encombrement et le poids du moteur, augmentant ainsi la consommation spécifique du turboréacteur.

Le document WO 2013/141926 décrit un turboréacteur, et plus particulièrement un système de refroidissement des enceintes de palier et des arbres du turboréacteur. Les documents US 2016/0003142 A1 et US 2009/0218006 A1 décrivent encore d'autres turboréacteurs.

### RESUME DE L'INVENTION

Un objectif de l'invention est donc de proposer un turboréacteur à double flux qui présente une masse réduite en comparaison avec les turboréacteurs à double flux conventionnels tout en assurant une lubrification et un refroidissement optimal de ses équipements tels que ses paliers et le cas échéant son mécanisme de réduction.

Pour cela, l'invention propose un turboréacteur à double flux selon la revendication 1. Des caractéristiques préférées sont définies dans les revendications dépendantes.

### BREVE DESCRIPTION DES DESSINS

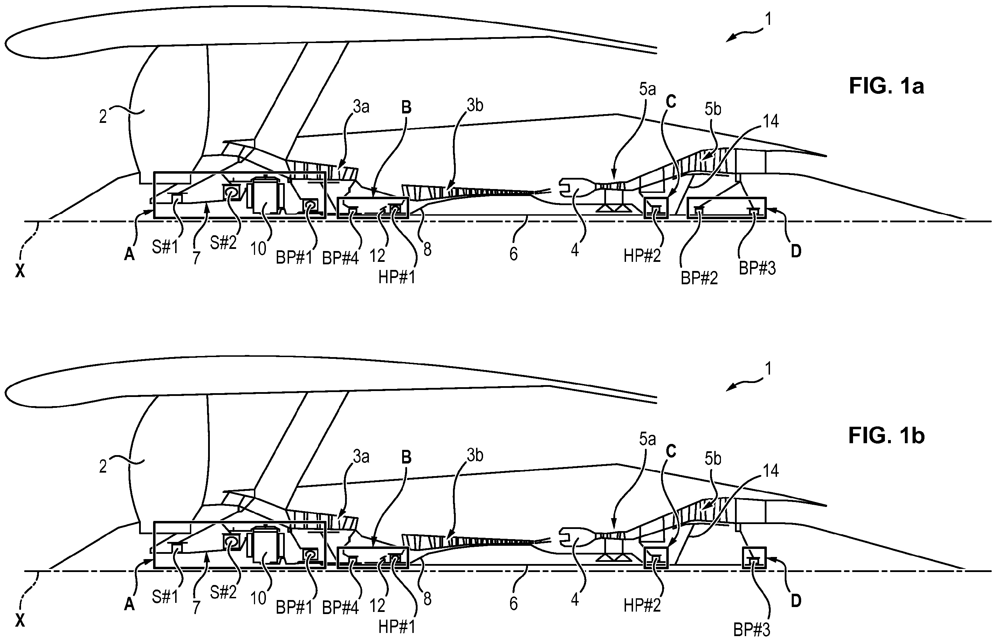

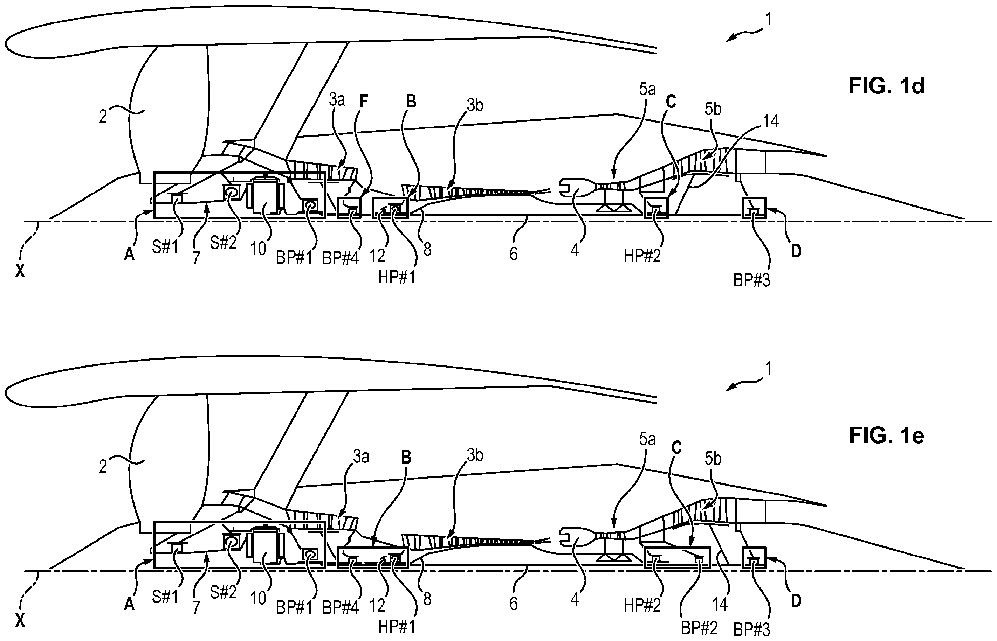

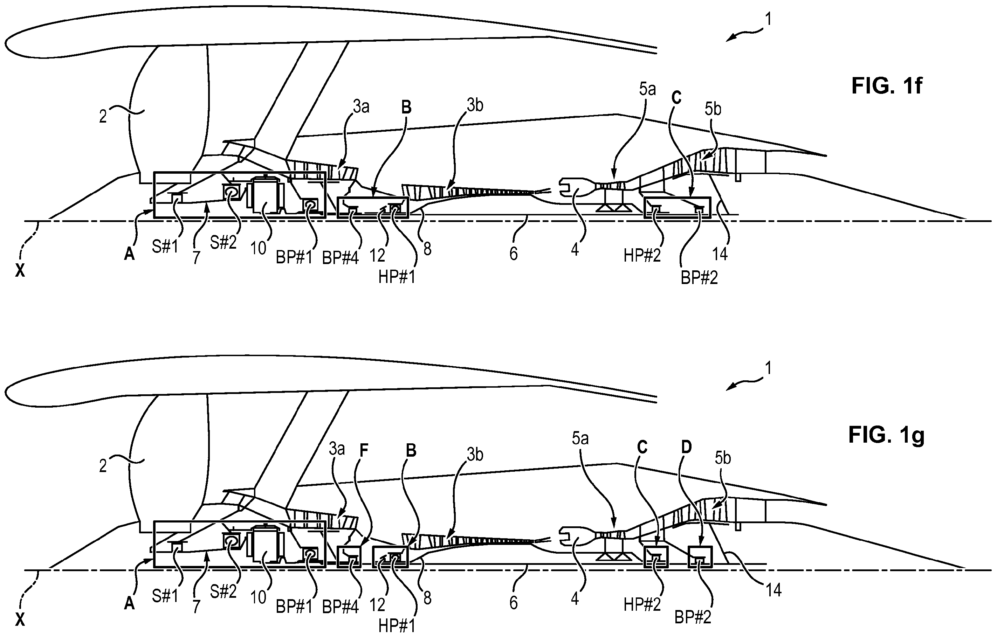

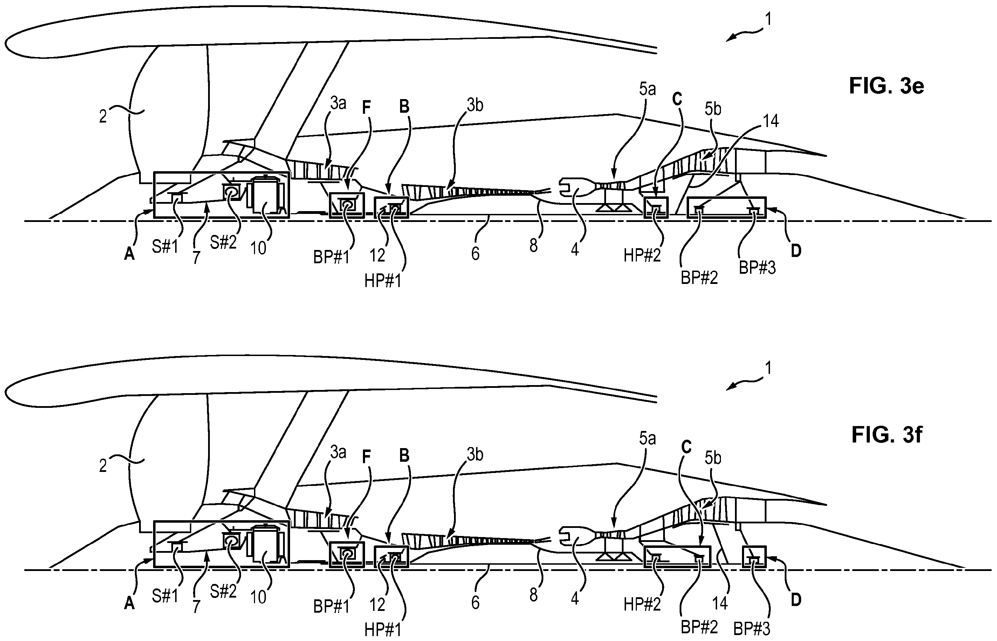

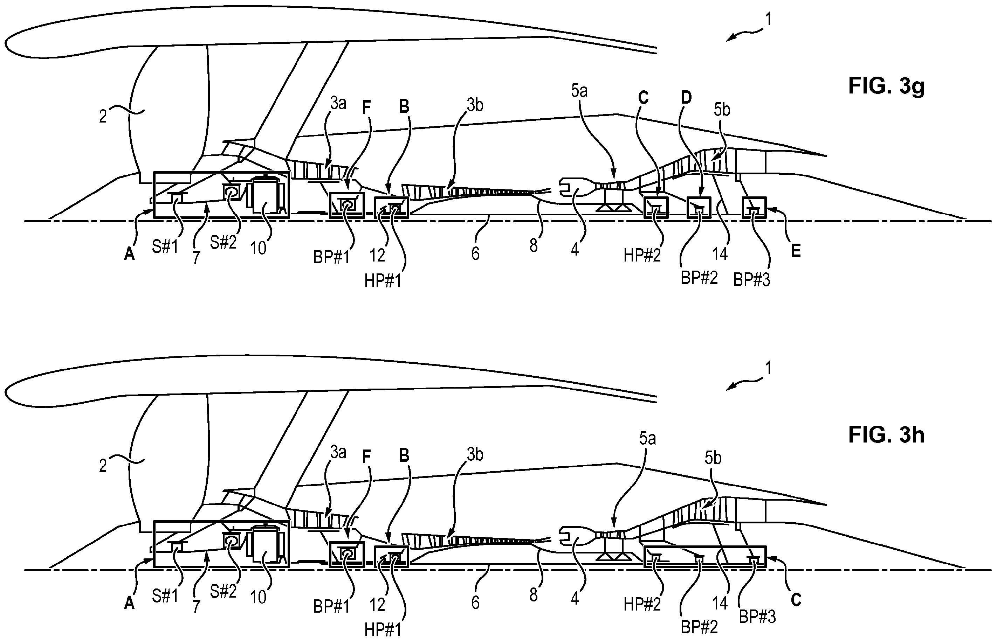

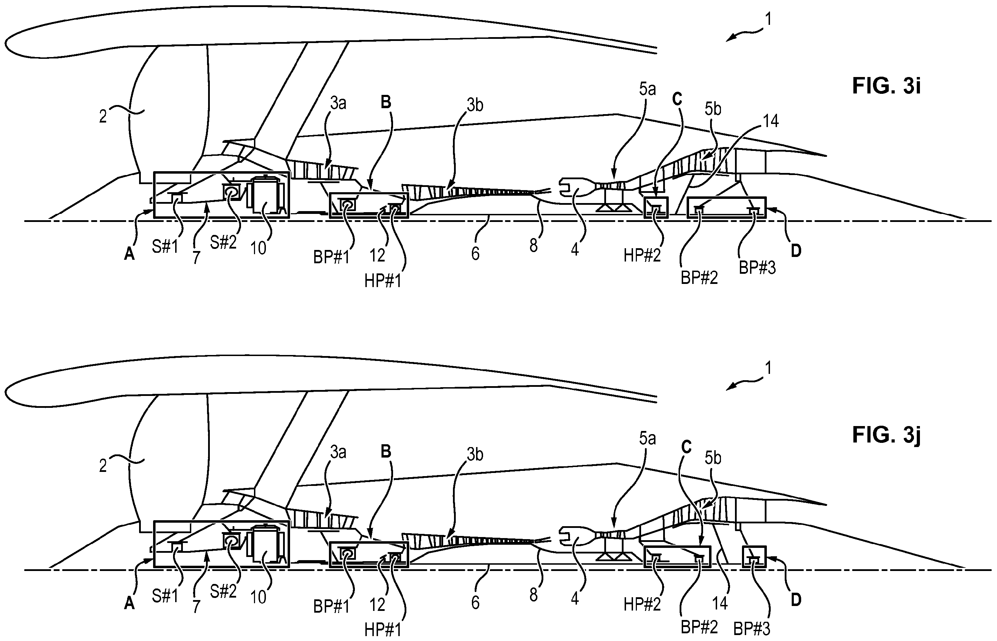

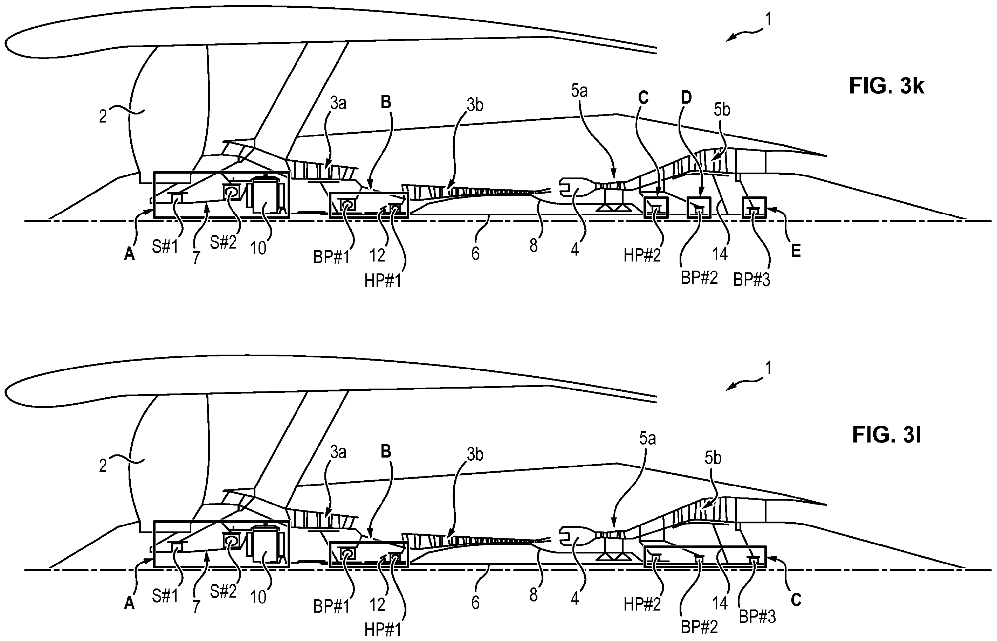

D'autres caractéristiques, buts et avantages de la présente invention apparaîtront mieux à la lecture de la description détaillée qui va suivre, et au regard des dessins annexés donnés à titre d'exemples non limitatifs et sur lesquels les Figures 1a à 3l sont des vues schématiques et en coupe de différents modes de réalisation d'un turboréacteur conformes à l'invention, sur lesquelles seule une partie du turboréacteur a été représentée. Les exemples des figures 1b, 1d, 1f, 1g et 3e-3l ne sont pas couverts par les revendications.

### DESCRIPTION DETAILLEE D'UN MODE DE REALISATION

Dans ce qui suit, un turboréacteur 1 va à présent être décrit en référence aux figures annexées.

Le turboréacteur 1 comprend, de manière conventionnelle, une soufflante 2 et un corps primaire. Le corps primaire comprend, dans le sens d'écoulement des gaz, un compresseur basse pression 3a, un compresseur haute pression 3b, une chambre de combustion 4, une turbine haute pression 5a, une turbine basse pression 5b, et une tuyère d'échappement des gaz.

La soufflante 2 comprend un disque de soufflante pourvu d'aubes de soufflante à sa périphérie qui, lorsqu'elles sont mises en rotation, entraînent le flux d'air dans les espaces d'écoulement primaire et secondaire du turboréacteur 1. Le disque de soufflante est entrainé en rotation par un arbre basse pression 6 de la turbine basse pression 5b.

Le turboréacteur 1 présente un taux de dilution élevé. Par taux de dilution élevé, on comprendra ici un taux de dilution supérieur à 10, par exemple compris entre 12 et 18. Pour cela, la soufflante 2 est découplée de la turbine basse pression 5b pour optimiser indépendamment leur vitesse de rotation respective, par exemple à l'aide d'un mécanisme de réduction 10 du type épicycloïdal ou planétaire, placé entre l'extrémité amont (par rapport au sens d'écoulement des gaz dans le turboréacteur 1) de l'arbre basse pression 6 et la soufflante 2.

La soufflante 2 est alors entrainée par l'arbre basse pression 6 par l'intermédiaire du mécanisme de réduction 10 et d'un arbre de soufflante 7, qui est fixé entre le mécanisme de réduction 10 et le disque de la soufflante 2.

Pour calculer le taux de dilution, le débit du flux secondaire et le débit du flux primaire sont mesurés lorsque le turboréacteur 1 est stationnaire dans une atmosphère standard (telle que définie par le manuel de l'Organisation de l'aviation civile internationale (OACI), Doc 7488/3, 3e édition) et au niveau de la mer.

Dans une forme de réalisation, le mécanisme de réduction 10 comprend un mécanisme de réduction 10 épicycloïdal.

Le rapport de réduction du mécanisme de réduction 10 est de préférence compris entre 2.6 et 5.

Le diamètre de la soufflante 2 peut être compris entre quatre-vingt pouces (203.2 centimètres) et cent-dix pouces (279,4 centimètres), de préférence entre quatre-vingt pouces (203.2 centimètres) et quatre-vingt-dix pouces (228.6 centimètres).

L'arbre de soufflante 7, l'arbre haute pression 8 et l'arbre basse pression 6 sont centrés sur l'axe X du turboréacteur 1 par une série de paliers.

Dans le cas d'espèce, l'arbre de soufflante 7 est supporté par le palier amont S#1 et le palier aval S#2, l'arbre haute pression 8 est supporté par le palier avant HP#1, le palier arrière HP#2 et le cas échéant un troisième palier HP#3, tandis que l'arbre basse pression 6 est supporté par les trois paliers BP#1, BP#2 et BP#3. Ces sept voire huit paliers étant conventionnels, ils ne seront pas davantage décrits ici.

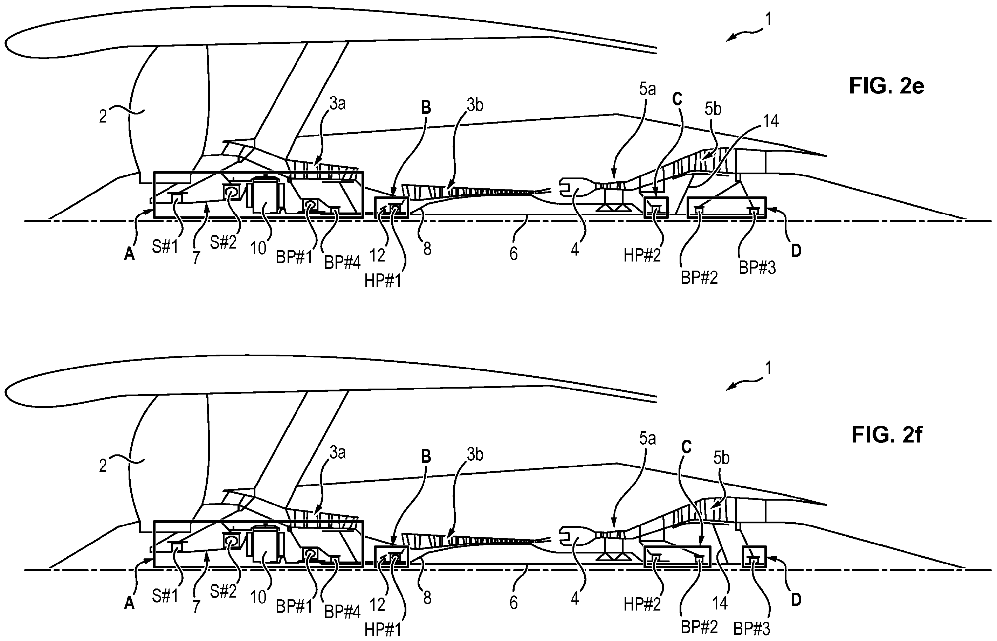

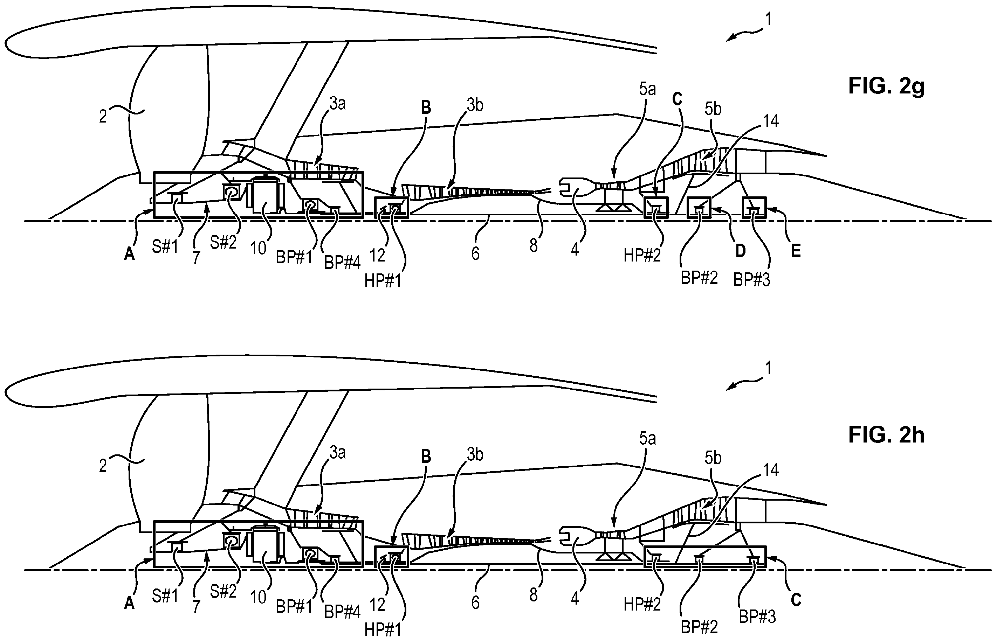

Dans une forme de réalisation illustrée sur les figures 1a à 2h, l'arbre basse pression 6 peut également être supporté par un quatrième palier BP#4, placé entre le premier palier BP#1, qui est le palier le plus en amont de l'arbre basse pression 6, et le palier avant HP#1 de l'arbre haute pression 8. Ce quatrième palier BP#4 peut notamment être monté sur l'arbre basse pression 6 et sur le carter inter-compresseur, soit entre le booster 3a et le compresseur haute pression 3b.

Le montage de l'arbre basse pression 6 sur quatre paliers BP#1-BP#4 permet de déplacer de manière efficace les modes de flexion de l'arbre basse pression 6, qui est supercritique (c'est-à-dire avec un mode de flexion dans la plage de fonctionnement), afin de positionner ces modes en régime transitoire du turboréacteur 1 avec des marges de sécurité par rapport aux régimes stabilisés. Par régime stabilisé, on comprendra ici un régime défini par un spectre de vitesses de rotation de l'arbre basse pression 6 dans lequel le turboréacteur 1 peut être placé et maintenu pendant un temps relativement long (compris entre quelques minutes et plusieurs heures). Des exemples de régimes stabilisés comprennent notamment le ralenti au sol (« idle » en anglais), le ralenti en vol, la croisière (« cruise » en anglais,) ou encore le décollage. Par régime transitoire, on comprendra ici un régime correspondant au passage d'un régime stabilisé à un autre dans lequel la vitesse de rotation de l'arbre basse pression 6 varie rapidement. En effet, les régimes stabilisés ne couvrent pas l'ensemble du spectre entre le ralenti et la redline (terme anglais désignant la vitesse maximale absolue rencontrée par l'arbre basse pression 6 durant tout le vol), de sorte qu'il peut être nécessaire, selon le régime stabilisé à atteindre, de passer par un régime transitoire pour atteindre ce régime stabilisé.

Ainsi, grâce à l'ajout du palier basse pression BP#4, le premier mode de déformation de l'arbre basse pression 6 est déplacé à environ 8000 tr/min, soit entre le régime de ralenti au sol (qui correspond à une vitesse de rotation de l'arbre basse pression de 2000 à 4500 tours par minute (tr/min)) et le régime de croisière (qui correspond à une vitesse de rotation de l'arbre basse pression de 8500 à 9500 tr/min), pour un turboréacteur 1 ayant une redline comprise entre 10 000 tr/min et 12 000 tr/min.

Il devient en outre possible de réduire le diamètre de l'arbre basse pression 6 et donc l'encombrement du corps primaire pour atteindre, avec le mécanisme de réduction 10 et le diamètre important de la soufflante 2, un taux de dilution élevé pour le turboréacteur 1. Typiquement, l'arbre basse pression 6 peut présenter un diamètre externe inférieur à cinquante millimètres, par exemple inférieur à quarante-cinq millimètres.

Ce positionnement des paliers BP#1 et BP#4 permet en outre de réduire les consommations de jeux (déplacement radial) du booster 3a, celui-ci étant à présent placé entre deux paliers BP#1 et BP#4.

Le turboréacteur 1 comprend en outre un engrenage 12 configuré pour prélever la puissance sur l'arbre haute pression 8. Ici, il s'agit d'un engrenage par roue conique connecté à un arbre radial. Cet engrenage 12 est ici placé en amont du palier avant HP#1.

Le turboréacteur 1 comprend au plus six enceintes A-F, configurées pour contenir l'huile introduite par les gicleurs afin de lubrifier et refroidir l'ensemble des paliers S#1, S#2, HP#1, HP#2, BP#1-BP#4 et le mécanisme de réduction 10. Plus précisément, le turboréacteur 1 peut comprendre exactement trois (A-C), quatre (A-D), cinq (A-E) enceintes ou six (A-F) enceintes. Ces enceintes sont illustrées de manière schématique sur les figures.

De même, le turboréacteur 1 comprend au plus six pompes de récupération (non visibles sur les figures), configurées pour recycler l'huile qui a été injectée dans les enceintes. Plus précisément, le turboréacteur 1 comprend au plus une pompe de récupération par enceinte.

A cet effet, les deux paliers de soufflante S#1 et S#2 et le mécanisme de réduction 10, et de manière optionnelle le palier basse pression BP#1, peuvent être logés dans une même enceinte A. Une pompe de récupération est alors associée à cette enceinte A. Les autres paliers peuvent être logés dans des enceintes dédiées ou au contraire dans plusieurs enceintes communes, afin de réduire le nombre d'enceintes nécessaires. On notera que pour ces autres paliers, un maximum d'une pompe de récupération d'huile par enceinte est nécessaire. Typiquement, une même pompe de récupération peut être utilisée pour deux enceintes, voire trois enceintes.

Le nombre d'enceintes est donc fortement réduit en comparaison avec l'art antérieur, qui place chaque équipement (palier #1, S#2, HP#1, HP#2, BP#1-BP#4 ou mécanisme de réduction 10) dans une enceinte. Cette réduction du nombre d'enceintes permet en outre de réduire au moins d'autant le nombre de pompes de récupération, puisqu'une telle pompe était systématiquement associée à une enceinte dans l'art antérieur. On réduit ainsi très fortement la masse du turboréacteur 1, l'encombrement radial et axial résultant de la présence des enceintes A-F. Le circuit de lubrification est en outre fortement simplifié, en raison de la réduction du nombre de pompes de récupération.

Dans les exemples de réalisation illustrés sur les figures 1a à 2h, le turboréacteur 1 comprend deux paliers de soufflante S#1 et S#2, un mécanisme de réduction 10, deux paliers haute pression HP#1 et HP#2 et quatre paliers basse pression BP#1, BP#2, BP#3 et BP#4.

Le turboréacteur 1 peut alors comprendre exactement trois, quatre ou cinq enceintes, les paliers et le mécanisme de réduction 10 étant répartis comme suit dans ces enceintes.

Dans l'exemple de réalisation illustré sur la figure 1a, le turboréacteur 1 comprend quatre enceintes A-D, chaque enceinte comprenant au plus une pompe de récupération :
- une enceinte A logeant les deux paliers de soufflante S#1 et S#2, le mécanisme de réduction 10 et le palier basse pression BP#1,
- une enceinte B logeant le palier basse pression BP#4 et le palier haute pression avant HP#1.
- une enceinte C logeant le palier haute pression arrière HP#2.
- une enceinte D logeant les paliers basse pression BP#2 et BP#3.

Dans cet exemple de réalisation, le turboréacteur 1 comprend donc au plus quatre pompes de récupération, à savoir une pompe de récupération par enceinte A à D. En variante, le turboréacteur 1 peut comprendre exactement trois pompes de récupération, à savoir une pompe pour l'enceinte A, une pompe pour l'enceinte B et une pompe configurée pour récupérer l'huile dans les enceintes C et D.

Le deuxième et le troisième palier basse pression BP#2 et BP#3 sont reliés au carter d'échappement et l'arbre basse pression est relié au carter de turbine basse pression.

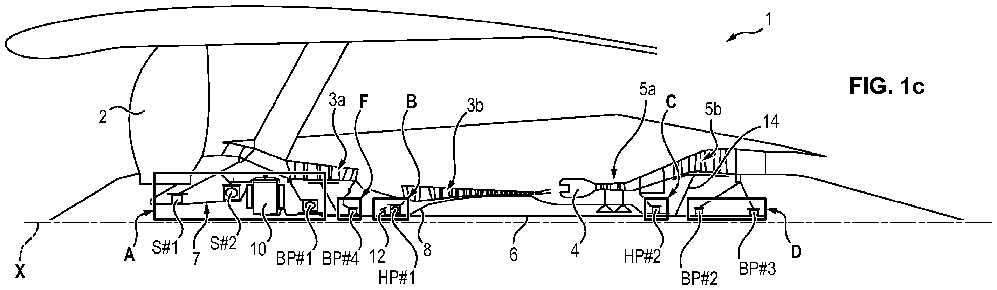

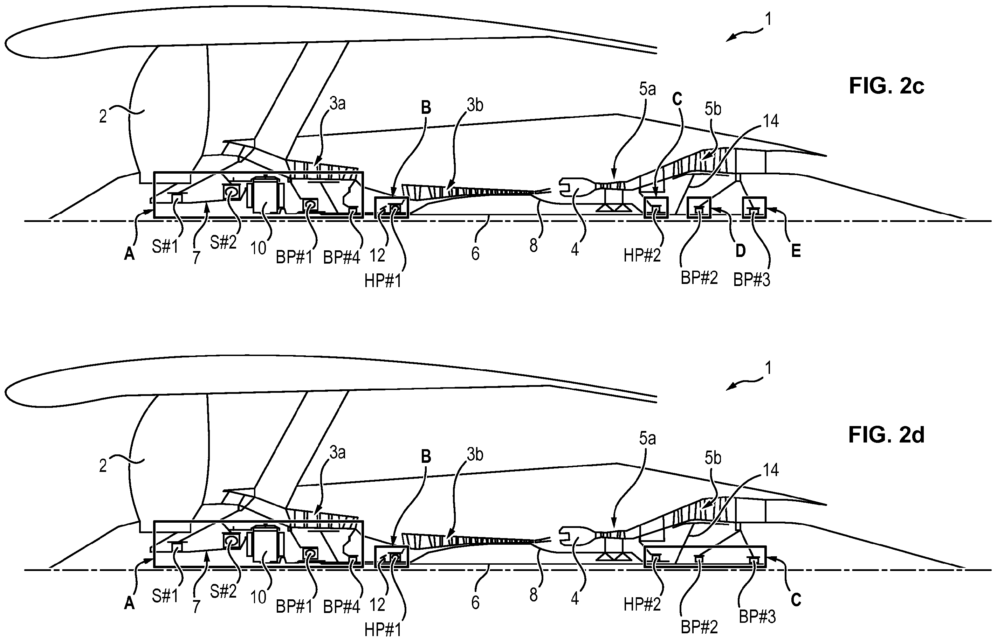

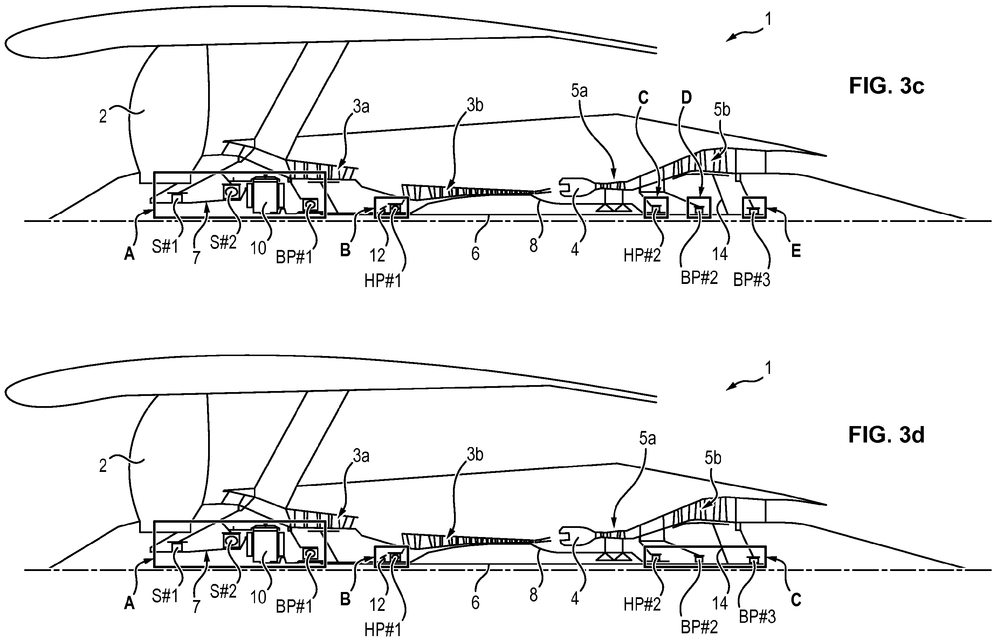

On notera que, de manière générale, lorsque le deuxième et le troisième palier basse pression BP#2 et BP#3 sont logés dans une même enceinte (comme illustré par exemple sur la figure 1a, mais également dans les modes de réalisation des figures 1c, 2a, 2e,3a, 3e et 3i), le deuxième palier BP#2 est de préférence fixé sur le carter d'échappement. Par ailleurs, lorsque le deuxième palier basse pression BP#2 et le palier arrière haute pression HP#2 sont logés dans une même enceinte (comme illustré par exemple sur la figure 1e, 1f, 2b, 2f, 3b, 3f et 3j), le deuxième palier BP#2 est de préférence fixé sur le carter inter-turbines. En revanche, lorsque le deuxième palier basse pression BP#2, le troisième palier basse pression BP#3 et le palier arrière HP#2 de l'arbre haute pression sont logés dans une même enceinte ou dans trois enceintes distinctes, le deuxième palier BP#2 peut être fixé soit sur le carter d'échappement (comme illustré notamment sur les figures 2c et 2d) soit sur le carter inter-turbines (comme illustré notamment sur les figures 3c et 3d).

Optionnellement, l'arbre basse pression est en outre relié à la turbine basse pression par une liaison 14, entre le palier arrière HP#2 et le deuxième palier basse pression BP#2.

Dans une forme de réalisation, le turboréacteur 1 peut comprendre exactement trois pompes de récupération, à savoir une pompe pour l'enceinte A, une pompe pour l'enceinte B et une pompe configurée pour récupérer l'huile dans les enceintes C et D.

L'exemple de réalisation illustré en figure 1b est identique à celui illustré en figure 1a, excepté que le turboréacteur ne comprend pas de deuxième palier basse pression BP#2. L'arbre basse pression n'est donc supporté que par un palier (BP#3) en partie aval. Il et est en outre relié à la turbine basse pression par une liaison 14, entre le palier arrière HP#2 et le troisième palier basse pression BP#3. Dans cet exemple de réalisation, le turboréacteur 1 comprend donc au plus quatre pompes de récupération, à savoir une pompe de récupération par enceinte A à D. En variante, le turboréacteur 1 peut comprendre exactement trois pompes de récupération, à savoir une pompe pour l'enceinte A, une pompe pour l'enceinte B et une pompe configurée pour récupérer l'huile dans les enceintes C et D.

Les exemples de réalisation illustrés en figure 1c et 1d sont identiques à ceux illustrés en figure 1a et 1b, respectivement, excepté que le palier basse pression BP#4 et le palier haute pression avant HP#1 sont logés dans des enceintes E et B distinctes. Dans cet exemple de réalisation, le turboréacteur 1 peut comprendre une pompe de récupération par enceinte E, B ou en variante une unique pompe de récupération pour ces deux enceintes E, B.

L'exemple de réalisation illustré en figure 1e est identique à celui illustré en figure 1a, excepté que le palier basse pression BP#2 est placé dans l'enceinte C (avec le palier arrière HP#2) et est relié au carter interturbines. Dans cet exemple de réalisation, le turboréacteur 1 comprend donc au plus quatre pompes de récupération, à savoir une pompe de récupération par enceinte A à D. Dans une forme de réalisation, le turboréacteur 1 peut comprendre exactement trois pompes de récupération, à savoir une pompe pour l'enceinte A, une pompe pour l'enceinte B et une pompe configurée pour récupérer l'huile dans les enceintes C et D.

L'exemple de réalisation illustré en figure 1f est identique à celui illustré en figure 1e, excepté que le turboréacteur ne comprend pas de troisième palier basse pression BP#3. Dans cet exemple de réalisation, le turboréacteur 1 comprend donc au plus trois pompes de récupération, à savoir une pompe de récupération par enceinte A à C.

L'exemple de réalisation illustré en figure 1g est identique à celui illustré en figure 1f, excepté que le palier haute pression arrière HP#2 et le deuxième palier basse pression BP#2 sont chacun placés dans une enceinte C et D respective. Dans cet exemple de réalisation, le turboréacteur 1 comprend donc quatre enceintes A-D, chaque enceinte comprenant au plus une pompe de récupération. Dans une forme de réalisation, le turboréacteur 1 peut comprendre exactement trois pompes de récupération, à savoir une pompe pour l'enceinte A, une pompe pour l'enceinte B et une pompe configurée pour récupérer l'huile dans les enceintes C et D.

En variante, un exemple de réalisation (non représenté) identique à celui illustré en figure 1e est également envisageable avec pour seule modification par rapport à la figure 1e le fait que le palier haute pression arrière HP#2 et les paliers basse pression BP#2 et BP#3 sont placés dans une unique enceinte. Le cas échéant, le deuxième palier basse pression BP#2 peut être connecté soit au carter inter-turbine, soit au carter d'échappement. Dans cet exemple de réalisation, le turboréacteur 1 comprend donc trois enceintes A-C, chaque enceinte comprenant au plus une pompe de récupération.

En variante, un autre exemple de réalisation (non représenté) identique à celui illustré en figure 1e est également envisageable avec pour seule modification par rapport à la figure 1e le fait que le palier haute pression arrière HP#2 et les paliers basse pression BP#2 et BP#3 sont chacun placés dans une enceinte dédiée. Le cas échéant, le deuxième palier basse pression BP#2 peut être connecté soit au carter inter-turbine, soit au carter d'échappement. Dans cet exemple de réalisation, le turboréacteur 1 comprend donc cinq enceintes A-E, chaque enceinte comprenant au plus une pompe de récupération. En variante, le turboréacteur pourrait comprendre exactement 3 ou 4 pompes de récupération, en utilisant une seule pompe de récupération pour récupérer l'huile des enceintes C et D, ou D et E, ou C, D et E.

On notera que, quel que soit l'exemple de réalisation, le palier basse pression BP#4 et le palier haute pression avant HP#1 peuvent être logés soit dans une même enceinte B, soit dans des enceintes séparées (comme illustré sur les figures 1c et 1d). Ainsi, on peut obtenir un turboréacteur comprenant jusqu'à six enceintes A-F (c'est-à-dire un turboréacteur 1 comprenant trois enceintes A, B et F en amont de la chambre de combustion, comme illustré sur la figure 1c, et trois enceintes C, D et E en aval, comme illustré notamment sur les figures 2c et 3c).

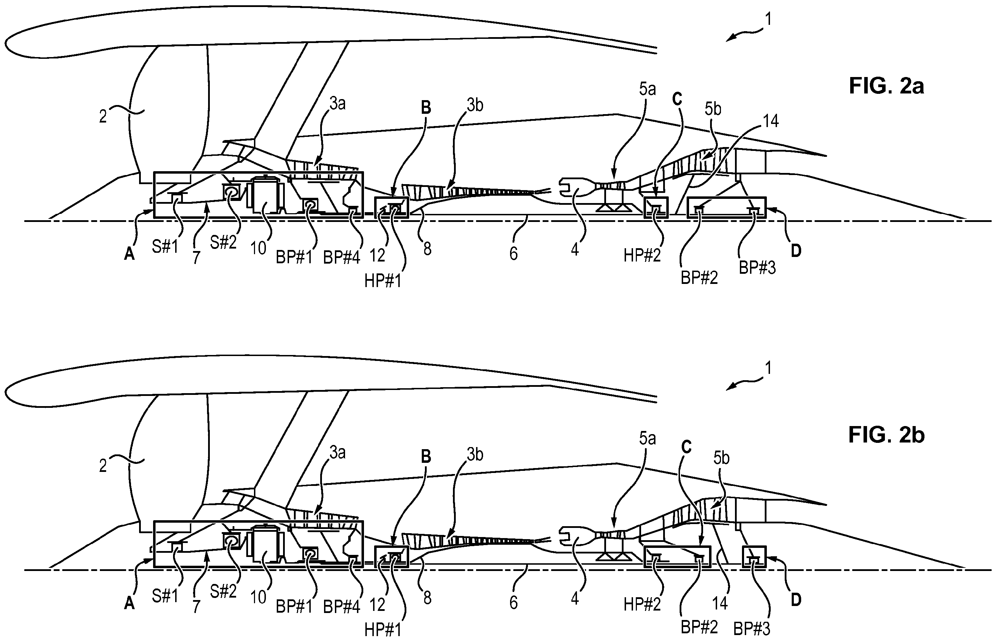

Dans l'exemple de réalisation illustré sur la figure 2a, le turboréacteur 1 comprend quatre enceintes A-D, chaque enceinte comprenant au plus une pompe de récupération :
- une enceinte A logeant les deux paliers de soufflante S#1 et S#2, le mécanisme de réduction 10 et les paliers basse pression BP#1 et BP#4.
- une enceinte B logeant le palier haute pression avant HP#1.
- une enceinte C logeant le palier haute pression arrière HP#2.
- une enceinte D logeant les paliers basse pression BP#2 et BP#3.

Le deuxième et le troisième palier basse pression BP#2 et BP#3 sont reliés au carter d'échappement. Par ailleurs, l'arbre basse pression est relié au carter de turbine basse pression, entre le palier arrière haute pression HP#2 et le deuxième palier basse pression BP#2.

Dans une forme de réalisation, le turboréacteur 1 peut comprendre exactement trois pompes de récupération, à savoir une pompe pour l'enceinte A, une pompe pour l'enceinte B et une pompe configurée pour récupérer l'huile dans les enceintes C et D.

Cet exemple de réalisation est donc identique à celui illustré en figure 1e, excepté que le palier basse pression BP#4 est placé dans l'enceinte A plutôt que dans l'enceinte B.

L'exemple de réalisation illustré en figure 2b est identique à celui illustré en figure 2a, excepté que le palier basse pression BP#2 est placé dans l'enceinte C, que le deuxième palier basse pression BP#2 est connecté au carter inter-turbine et que la liaison 14 s'étend optionnellement entre le deuxième BP#2 et le troisième palier basse pression BP#3.Le turboréacteur 1 peut donc comprendre au plus quatre pompes de récupération, à savoir une pompe de récupération par enceinte A à D, ou en variante exactement trois pompes de récupération, en utilisant une seule pompe pour récupérer l'huile dans les enceintes C et D.

L'exemple de réalisation illustré en figure 2c est identique à celui illustré en figure 2a, excepté que le palier haute pression arrière HP#2 et les paliers basse pression BP#2 et BP#3 sont chacun placés dans une enceinte respective C, D, E. En variante, le deuxième palier basse pression BP#2 pourrait être connecté au carter inter-turbines. Dans cet exemple de réalisation, le turboréacteur 1 comprend donc cinq enceintes A-E, chaque enceinte comprenant au plus une pompe de récupération. En variante, le turboréacteur pourrait comprendre exactement 3 ou 4 pompes de récupération, en utilisant une seule pompe de récupération pour récupérer l'huile des enceintes C et D, ou D et E, ou C, D et E.

L'exemple de réalisation illustré en figure 2d est identique à celui illustré en figure 2a, excepté que le turboréacteur 1 ne comprend que les enceintes A, B et C, l'enceinte C logeant le palier haute pression arrière HP#2 et les paliers basse pression BP#2 et BP#3. En variante, le deuxième palier basse pression BP#2 pourrait être connecté au carter inter-turbines. Dans cet exemple de réalisation, le turboréacteur 1 comprend donc au plus trois pompes de récupération, à savoir une pompe de récupération par enceinte A à C.

Les exemples de réalisation illustrés en figure 2e à 2h sont identiques à ceux illustrés en figures 2a à 2d respectivement, excepté que le palier basse pression BP#4 est supporté par le carter d'entrée (tout comme le palier basse pression BP#1), c'est-à-dire par le carter qui s'étend entre la soufflante 2 et le booster 3a.

Optionnellement, le turboréacteur 1 peut ne pas comprendre de deuxième palier basse pression BP#2 ou de troisième palier basse pression BP#3, de manière analogue à ce qui a été décrit et illustré en référence aux figures 1b, 1d, 1f et 1g.

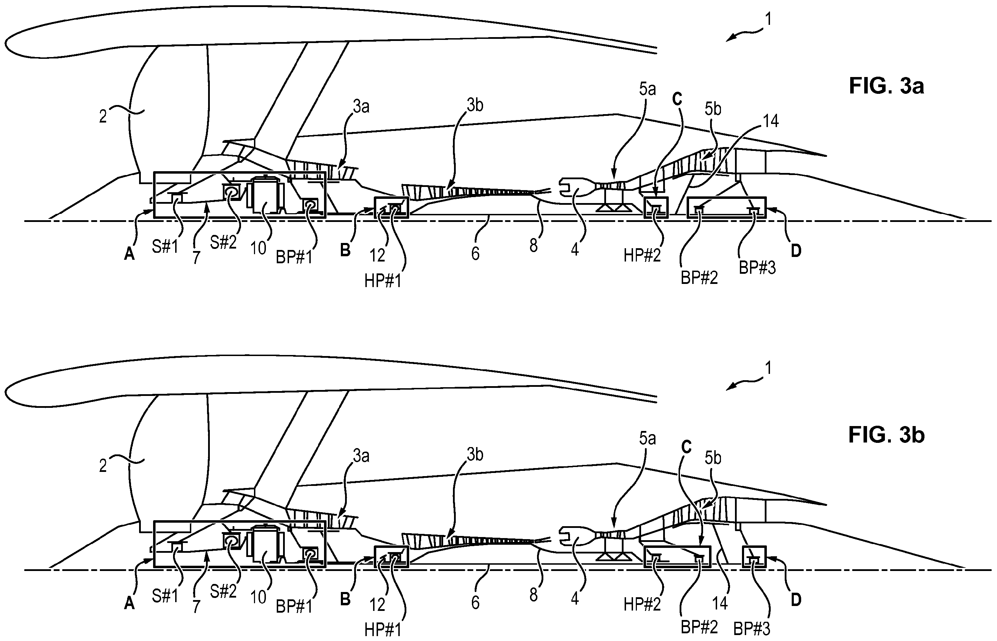

Dans l'exemple de réalisation illustré sur les figures 3a à 3c, le turboréacteur 1 comprend deux paliers de soufflante S#1 et S#2, un mécanisme de réduction 10, deux paliers haute pression HP#1 et HP#2 et exactement trois paliers basse pression BP#1, BP#2 et BP#3.

Dans l'exemple de réalisation illustré sur la figure 3a, le turboréacteur 1 comprend quatre enceintes A-D :
- une enceinte A logeant les deux paliers de soufflante S#1 et S#2, le mécanisme de réduction 10 et le palier basse pression BP#1,
- une enceinte B logeant le palier haute pression avant HP#1.
- une enceinte C logeant le palier haute pression arrière HP#2.
- une enceinte D logeant les paliers basse pression BP#2 et BP#3.

Dans cet exemple de réalisation, le turboréacteur 1 comprend au plus quatre pompes de récupération, à savoir une pompe de récupération par enceinte A à D. En variante, le turboréacteur 1 pourrait comprendre exactement 3 pompes, en utilisant une seule pompe de récupération pour récupérer l'huile des enceintes C et D.

Le deuxième et le troisième palier basse pression BP#2 et BP#3 sont reliés au carter d'échappement. Par ailleurs, l'arbre basse pression est relié au carter de turbine basse pression, entre le palier arrière haute pression HP#2 et le deuxième palier basse pression BP#2.

L'exemple de réalisation illustré en figure 3b est identique à celui illustré en figure 1a, excepté que le palier basse pression BP#2 est placé dans l'enceinte C (avec le palier arrière haute pression HP#2) et que le deuxième palier basse pression BP#2 est connecté au carter inter-turbines et que la liaison 14 s'étend optionnellement entre le deuxième BP#2 et le troisième palier basse pression BP#3. Dans cet exemple de réalisation, le turboréacteur 1 comprend au plus quatre pompes de récupération, à savoir une pompe de récupération par enceinte A à D. En variante, le turboréacteur 1 pourrait comprendre exactement trois pompes, en utilisant une seule pompe de récupération pour récupérer l'huile des enceintes C et D.

L'exemple de réalisation illustré en figure 3c est identique à celui illustré en figure 3b, excepté que le palier haute pression arrière HP#2 et les paliers basse pression BP#2 et BP#3 sont chacun placés dans une enceinte respective C, D, E. En variante, le deuxième palier basse pression BP#2 pourrait être connecté au carter d'échappement, auquel cas la liaison 14 s'étend optionnellement entre le palier arrière haute pression HP#2 et le deuxième palier basse pression BP#2. Dans cet exemple de réalisation, le turboréacteur 1 comprend au plus cinq enceintes A-E, chaque enceinte comprenant au plus une pompe de récupération. En variante, le turboréacteur pourrait comprendre exactement trois ou quatre pompes de récupération, en utilisant une seule pompe de récupération pour récupérer l'huile des enceintes C et D, ou D et E, ou C, D et E.

L'exemple de réalisation illustré en figure 3d est identique à celui illustré en figure 3b, excepté que le turboréacteur 1 ne comprend que les enceintes A, B et C, l'enceinte C logeant le palier haute pression arrière HP#2 et les paliers basse pression BP#2 et BP#3. Dans cet exemple de réalisation, le turboréacteur 1 comprend exactement trois pompes de récupération.

Les exemples de réalisation illustré en figure 3e à 3h sont identiques à ceux illustrés en figure 3a à 3d, respectivement, excepté que le palier basse pression BP#1 n'est pas placé dans l'enceinte A, mais dans une enceinte F distincte, en amont de l'enceinte B du palier avant haute pression HP#1.

Les exemples de réalisation illustré en figure 3i à 3l sont identiques à ceux illustrés en figure 3a à 3d, respectivement, excepté que le palier basse pression BP#1 est cette fois placé dans la même enceinte B que le palier avant haute pression HP#1, et non plus dans l'enceinte avant A ni dans l'enceinte F.

Dans une forme de réalisation, l'arbre haute pression 8 peut en outre comprendre un troisième palier haute pression (non visible sur les figures), placé entre le palier avant HP#1 et le palier arrière HP#2. Dans ce cas, quel que soit l'exemple de réalisation, le palier HP#3 est placé au voisinage du palier haute pression avant HP#1, voire même logé dans l'enceinte B avec le palier haute pression avant HP#1.

De manière optionnelle, quelle que soit la forme de réalisation, l'enceinte qui loge le palier avant HP#1 (généralement, l'enceinte B) loge également l'engrenage 12 configuré pour prélever la puissance sur l'arbre haute pression 8. Cette configuration permet ainsi de mutualiser la lubrification de l'engrenage en question et du palier avant HP#1.

Dans un exemple de réalisation, le palier avant HP#1 de l'arbre haute pression 8 comprend un palier à billes tandis que les paliers arrière HP#2 et HP#3 comprennent des paliers à rouleaux.

De manière optionnelle également, quelle que soit la forme de réalisation, le deuxième palier basse pression BP#2 peut être supprimé. Dans ce cas, l'arbre basse pression est supporté par un unique palier arrière (BP#3) et un ou deux paliers avant (BP#1 et BP#4).

Le palier avant de soufflante S#1 peut être du type palier à rouleaux et comprendre une bague interne et une bague externe coaxiales entre lesquelles sont montés des rouleaux.

Le palier arrière de soufflante S#2 peut être du type palier à billes et comprendre une bague interne et une bague externe coaxiales entre lesquelles sont montés des billes.

A titre de comparaison, dans l'art antérieur, le palier avant de soufflante S#1 et le palier arrière de soufflante S#2 comprennent chacun un palier à rouleau conique, qui sont assimilables dynamiquement à un unique palier. Par opposition, la mise en œuvre d'un palier à rouleaux et d'un palier à billes pour le palier avant de soufflante et le palier arrière de soufflante respectivement permet ainsi d'avoir deux « vrais », permettant ainsi d'avoir un guidage en rotation plus précis.

Le palier basse pression BP#1 peut être du type palier à billes et comprendre une bague interne et une bague externe coaxiales entre lesquelles sont montées des billes.

Les paliers basse pression BP#2, BP#3 et le cas échéant BP#4 peuvent être du type palier à rouleaux.

Les enceintes A à C (et le cas échéant les enceintes D et E) peuvent être ventilées ou non ventilées.

Par enceinte non ventilée (« non vented » en anglais), on comprendra ici une enceinte qui n'est pas directement en communication fluidique avec l'air libre et qui ne comprend pas de tube de dégazage. A cet effet, une pompe de récupération d'huile connectée à un port de récupération, peut être placée au point bas du moteur afin de récupérer l'huile et l'air de l'enceinte non ventilée et créer ainsi une aspiration d'air à travers les joints de l'enceinte. La pompe a avantageusement un débit de pompage supérieur à celui de l'arrivée d'huile dans l'enceinte permettant la lubrification du ou des palier(s) et le cas échéant du mécanisme de réduction 10. Dans ce cas, il est préférable d'avoir un flux d'air à travers les deux joints d'étanchéité amont et aval, afin de retenir l'huile au niveau des deux joints. De plus, pour qu'il y ait des flux d'air traversant les deux joints de l'enceinte huile, il est préférable que la pression en amont des deux joints soit sensiblement égale afin d'éviter la formation d'un chemin préférentiel du flux d'air qui compromettrait la performance d'étanchéité de l'un des joints.

Par enceinte ventilée (« vented » en anglais), on comprendra ici une enceinte susceptible d'être en communication avec l'air libre tout en étant maintenue à une pression proche de la pression atmosphérique. Les paliers à l'intérieur de telles enceintes sont baignés par un brouillard d'huile qui est extrait de l'enceinte en continu par un tube de dégazage, l'air et l'huile étant ensuite séparés dans un déshuileur. Dans une telle enceinte, la pompe de récupération a un débit de pompage sensiblement égal à celui de l'arrivée d'huile dans l'enceinte (via les gicleurs). Par ailleurs, il est possible d'avoir des flux d'air passant à travers les étanchéités amont et aval de l'enceinte, lesdits flux d'air ayant une pression supérieure ou égale à celle régnant dans l'enceinte.

Dans une forme de réalisation, lorsque l'enceinte comprend au plus deux étanchéités, l'enceinte est de préférence non ventilée. De même, lorsque l'enceinte comprend plus de deux étanchéités, l'enceinte est ventilée.

Typiquement, quel que soit le mode de réalisation, l'enceinte A est de préférence ventilée dans la mesure où elle comprend systématiquement une première étanchéité correspondant à l'interface entre le rotor de la soufflante 2 et le carter de soufflante 2 (l'enceinte A logeant les paliers de soufflante S#1 et S#2), une deuxième interface entre l'arbre de soufflante 7 et l'arbre basse pression 6 (l'enceinte A logeant le mécanisme de réduction 10) et une troisième interface entre l'arbre basse pression 6 et le carter inter-compresseurs (l'enceinte A logeant le palier basse pression BP#1). Cette enceinte A comprend donc nécessairement une pompe de récupération dédiée.

Dans les exemples de réalisation illustrés en figures 1c, 2c, 2g, 3c, 3g et 3k, les paliers arrière HP#2, BP#2 et BP#3 sont chacun logés dans une enceinte respective C, D et E. Ces enceintes C, D et E peuvent donc être non ventilées. Par ailleurs, pour ces enceintes et comme décrit en référence aux figures ci-dessus, les pompes de récupération peuvent (optionnellement) être mutualisées, c'est-à-dire que le groupe de lubrification comprend au plus trois pompes de récupération pour récupérer l'huile dans ces trois enceintes C, D et E, de préférence exactement deux pompes de récupération, voire une unique pompe de récupération.

En revanche, dans les exemples de réalisation illustrés en figures 2d, 2h, 3d, 3h et 3l, les paliers arrière HP#2, BP#2 et BP#3 sont tous les trois logés dans une même enceinte C, qui est donc de préférence ventilée. Dans ce cas, une pompe de récupération est associée à cette enceinte C.

Dans les exemples de réalisation illustrés sur les figures 1c, 1d, 2a-2h et 3a-3h, les enceintes B peuvent être non ventilées, celles-ci ne comprenant que le palier avant haute pression HP#1. Dans ce cas, une pompe de récupération est associée à cette enceinte B.

Dans les exemples illustrés sur les figures 1a-1d, 1g, 2a, 2e, 3a, 3e et (respectivement 1b, 1d, 1e, 2b, 2f, 3b, 3f et 3j) l'enceinte C (respectivement l'enceinte D) ne loge que le palier arrière haute pression HP#2 (respectivement que le palier arrière BP#3) et peut donc être non ventilée, tandis que l'enceinte D (respectivement l'enceinte C) loge deux paliers et peut donc être ventilée ou non ventilée. Des pompes de récupération peuvent donc être mutualisées pour ces enceintes, auquel cas le groupe de lubrification comprend moins de pompes de récupération qu'il n'y a d'enceintes.

De manière optionnelle, dans les exemples de réalisation illustrés en figures 1a-1d, les enceintes B peuvent être ventilées dans la mesure où elles logent les deux paliers (BP#1 et HP#1).

La mise en œuvre d'enceintes non ventilées présente l'avantage de réduire la consommation d'air prélevé au niveau du compresseur haute pression 3b, et donc d'augmenter la quantité d'air entrant dans la chambre de combustion 4, améliorant ainsi les performances du turboréacteur 1. On ne peut cependant pas mettre d'enceintes non ventilées partout car, au-delà de deux étanchéités il s'avère difficile de maintenir l'équilibre des pressions en amont des étanchéités.

## Revendications

1. Turboréacteur (1) à double flux comprenant :
- un arbre basse pression (6) supporté par au moins deux paliers basse pression (BP#1-BP#4),
- un arbre haute pression (8) supporté par au moins un palier haute pression avant (HP#1) et un palier haute pression arrière (HP#2),
- un arbre de soufflante (7) supporté par au moins deux paliers de soufflante (S#1, S#2), et
- un mécanisme de réduction (10), couplant l'arbre basse pression (6) et l'arbre de soufflante (7),
le turboréacteur (1) comprenant en outre au plus six enceintes (A-F) logeant les paliers basse pression (BP#1-BP#4), les paliers haute pression (HP#1, HP#2), les paliers de soufflante (S#1, S#2) et le mécanisme de réduction (10), l'arbre basse pression (6) étant supporté par au moins trois paliers basse pression (BP#1-BP#4), les paliers de soufflante (S#1, S#2), le mécanisme de réduction (10) et au moins un palier basse pression (BP#1) étant logés dans une même enceinte (A) qui est ventilée, et
le palier haute pression arrière (HP#2) etter deux autres paliers basse pression (BP#2, BP#3) qui sont des paliers basse pression arrières étant logés dans des enceintes (C, D, E) non ventilées.

2. Turboréacteur (1) selon la revendication 1, comprenant au plus cinq enceintes (A-F).

3. Turboréacteur (1) selon l'une des revendications 1 ou 2, dans lequel chaque enceinte comprend au plus une pompe de récupération.

4. Turboréacteur (1) selon l'une des revendications 1 à 3, dans lequel l'arbre basse pression (6), l'arbre haute pression (8) et l'arbre de soufflante (7) sont supportés par huit ou neuf paliers (S#1, S#2, HP#1, HP#2, BP#1-BP#4) en tout.

5. Turboréacteur (1) selon l'une des revendications 1 à 4, dans lequel les paliers basse pression (BP#1-BP#4) comprennent un palier basse pression avant (BP#1, BP#4) et un palier basse pression arrière (BP#2, BP#3), le palier haute pression arrière (HP#2) et le palier basse pression arrière (BP#2, BP#3) étant chacun logés dans des enceintes (C, D) distinctes.

6. Turboréacteur (1) selon l'une des revendications 1 à 4, dans lequel les paliers basse pression (BP#1-BP#4) comprennent un palier basse pression avant (BP#1, BP#4) et un palier basse pression arrière (BP#2, BP#3), le palier haute pression arrière (HP#2) et le palier basse pression arrière (BP#2, BP#3) étant logés dans une même enceinte (C).

7. Turboréacteur (1) selon l'une des revendications 1 à 6, dans lequel un premier et un deuxième desdits paliers basse pression (BP#1, BP#4) sont positionnés entre les paliers de soufflante (S#1, S#2) et les paliers haute pression (HP#1, HP#2).

8. Turboréacteur (1) selon l'une des revendications 1 à 7, dans lequel l'arbre basse pression (6) est supporté par quatre paliers basse pression (BP#1-BP#4), un premier et un deuxième des paliers basse pression (BP#1, BP#4) étant positionnés entre les paliers de soufflante (S#1, S#2) et les paliers haute pression (HP#1, HP#2) tandis qu'un troisième et un quatrième des paliers basse pression (BP#2, BP#3) sont positionnés en aval des paliers haute pression (HP#1, HP#2), l'amont et l'aval étant définis suivant un sens d'écoulement des gaz dans le turboréacteur (1).

9. Turboréacteur (1) selon l'une des revendications 1 à 8, présentant un taux de dilution supérieur ou égal à 10, de préférence supérieur ou égal à 18, par exemple entre 12 et 18.

10. Turboréacteur (1) selon l'une des revendications 1 à 9, dans lequel le mécanisme de réduction (10) comprend un mécanisme de réduction (10) planétaire présentant un rapport de réduction compris entre 2.6 et 5.

11. Turboréacteur (1) selon l'une des revendications 1 à 10, dans lequel les paliers de soufflante comprennent un palier avant (S#1) et un palier arrière (S#2), le palier avant (S#1) comprenant un palier à rouleaux comprenant une bague interne et une bague externe coaxiales entre lesquelles sont montés des rouleaux tandis que le palier arrière (S#2) comprend un palier à billes comprenant une bague interne et une bague externe coaxiales entre lesquelles sont montés des billes.

12. Turboréacteur selon l'une des revendications 1 à 11, dans lequel les paliers de soufflante (S#1, S#2) et le mécanisme de réduction sont logés dans une seule et même enceinte (A) associée à une pompe de récupération.

## Patentansprüche

1. Zweikreis-Turbotriebwerk (1), umfassend:
- eine Niederdruckwelle (6), die von mindestens zwei Niederdrucklagern (BP#1-BP#4) getragen wird,
- eine Hochdruckwelle (8), die von mindestens einem vorderen Hochdrucklager (HP#1) und einem hinteren Hochdrucklager (HP#2) getragen wird,
- eine Gebläsewelle (7), die von mindestens zwei Gebläselagern (S#1, S#2) getragen wird, und
- einen Untersetzungsmechanismus (10), der die Niederdruckwelle (6) und die Gebläsewelle (7) koppelt,
wobei das Turbotriebwerk (1) ferner höchstens sechs Gehäuse (A-F) umfasst, die die Niederdrucklager (BP#1-BP#4), die Hochdrucklager (HP#1, HP#2), die Gebläselager (S#1, S#2) und den Untersetzungsmechanismus (10) aufnehmen, wobei die Niederdruckwelle (6) von mindestens drei Niederdrucklagern (BP#1-BP#4) getragen wird, wobei die Gebläselager (S#1, S#2), der Untersetzungsmechanismus (10) und mindestens ein Niederdrucklager (BP#1) in demselben Gehäuse (A) untergebracht sind, das belüftet ist, und das hintere Hochdrucklager (HP#2) und die zwei anderen Niederdrucklager (BP#2; BP#3), die hintere Niederdrucklager sind, in nicht belüfteten Gehäusen (C, D, E) untergebracht sind.

2. Turbotriebwerk (1) nach Anspruch 1, umfassend höchstens fünf Gehäuse (A-F).

3. Turbotriebwerk (1) nach einem der Ansprüche 1 oder 2, wobei jedes Gehäuse höchstens eine Rückgewinnungspumpe umfasst.

4. Turbotriebwerk (1) nach einem der Ansprüche 1 bis 3, wobei die Niederdruckwelle (6), die Hochdruckwelle (8) und die Gebläsewelle (7) von insgesamt acht oder neun Lagern (S#1, S#2, HP#1, HP#2, BP#1-BP#4) getragen werden.

5. Turbotriebwerk (1) nach einem der Ansprüche 1 bis 4, wobei die Niederdrucklager (BP#1-BP#4) ein vorderes Niederdrucklager (BP#1, BP#4) und ein hinteres Niederdrucklager (BP#2, BP#3) umfassen, wobei das hintere Hochdrucklager (HP#2) und das hintere Niederdrucklager (BP#2, BP#3) jeweils in separaten Gehäusen (C, D) untergebracht sind.

6. Turbotriebwerk (1) nach einem der Ansprüche 1 bis 4, wobei die Niederdrucklager (BP#1-BP#4) ein vorderes Niederdrucklager (BP#1, BP#4) und ein hinteres Niederdrucklager (BP#2, BP#3) umfassen, wobei das hintere Hochdrucklager (HP#2) und das hintere Niederdrucklager (BP#2, BP#3) in einem gemeinsamen Gehäuse (C) untergebracht sind.

7. Turbotriebwerk (1) nach einem der Ansprüche 1 bis 6, wobei ein erstes und ein zweites der Niederdrucklager (BP#1, BP#4) zwischen den Gebläselagern (S#1, S#2) und den Hochdrucklagern (HP#1, HP#2) positioniert sind.

8. Turbotriebwerk (1) nach einem der Ansprüche 1 bis 7, wobei die Niederdruckwelle (6) von vier Niederdrucklagern (BP#1-BP#4) getragen wird, wobei ein erstes und ein zweites der Niederdrucklager (BP#1, BP#4) zwischen den Gebäselagern (S#1, S#2) und den Hochdrucklagern (HP#1, HP#2) positioniert ist, währenddessen ein drittes und ein viertes der Niederdrucklager (BP#2, BP#3) stromabwärts der Hochdrucklager (HP#1, HP#2) positioniert sind, wobei stromaufwärts und stromabwärts gemäß einer Gasströmungsrichtung in dem Turbotriebwerk (1) definiert sind.

9. Turbotriebwerk (1) nach einem der Ansprüche 1 bis 8 mit einem Verdünnungsverhältnis von über oder gleich 10, vorzugsweise von über oder gleich 18, beispielsweise zwischen 12 und 18.

10. Turbotriebwerk (1) nach einem der Ansprüche 1 bis 9, wobei der Untersetzungsmechanismus (10) einen Planetenuntersetzungsmechanismus (10) mit einem Untersetzungsverhältnis zwischen 2,6 und 5 umfasst.

11. Turbotriebwerk (1) nach einem der Ansprüche 1 bis 10, wobei die Gebläselager ein vorderes Lager (S#1) und ein hinteres Lager (S#2) umfassen, wobei das vordere Lager (S#1) ein Rollenlager umfasst, das einen Innenring und einen Außenring umfasst, die koaxial sind, zwischen denen Rollen angebracht sind, währenddessen das hintere Lager (S#2) ein Kugellager umfasst, das einen Innenring und einen Außenring umfasst, die koaxial sind, zwischen denen Kugeln angebracht sind.

12. Turbotriebwerk nach einem der Ansprüche 1 bis 11, wobei die Gebläselager (S#1, S#2) und der Untersetzungsmechanismus in ein und demselben Gehäuse (A) untergebracht sind, das einer Rückgewinnungspumpe zugeordnet ist.

## Claims

1. A dual-flow turbojet engine (1) comprising :
- a low-pressure shaft (6) supported by at least two low-pressure bearings (BP#1-BP#4),
- a high-pressure shaft (8) supported by at least one front high-pressure bearing (HP#1) and one rear high-pressure bearing (HP#2),
- a fan shaft (7) supported by at least two fan bearings (S#1, S#2), and
- a reduction mechanism (10), coupling the low-pressure shaft (6) and the fan shaft (7),
the turbojet engine (1) further comprising at most six enclosures (A-F) housing the low-pressure bearings (BP#1-BP#4), the high-pressure bearings (HP#1, HP#2), the fan bearings (S#1, S#2) and the reduction mechanism (10), the low-pressure shaft (6) being supported by at least three low-pressure bearings (BP#1-BP#4), the fan bearings (S#1, S#2), the reduction mechanism (10) and at least one low-pressure bearing (BP#1) being housed in a same enclosure (A), which is ventilated, and the rear high-pressure bearing (HP#2) and two further low-pressure bearings (BP#2, BP#3), which are rear low-pressure bearings, being housed in non-ventilated enclosures (C, D, E).

2. A turbojet engine (1) according to claim 1, comprising at most five enclosures (A-F).

3. A turbojet engine (1) according to any one of claims 1 or 2, wherein each enclosure comprises at most one scavenge pump.

4. A turbojet engine (1) according to any one of claims 1 to 3, wherein the low-pressure shaft (6), the high-pressure shaft (8) and the fan shaft (7) are supported by eight or nine bearings (S#1, S#2, HP#1, HP#2, BP#1-BP#4) in all.

5. A turbojet engine (1) according to any one of claims 1 to 4, wherein the low-pressure bearings (BP#1-BP#4) comprise a front low-pressure bearing (BP#1, BP#4) and a rear low-pressure bearing (BP#2, BP#3), the rear high-pressure bearing (HP#2) and the rear low-pressure bearing (BP#2, BP#3) each being housed in separate enclosures (C, D).

6. A turbojet engine (1) according to any one of claims 1 to 4, wherein the low-pressure bearings (BP#1-BP#4) comprise a front low-pressure bearing (BP#1, BP#4) and a rear low-pressure bearing (BP#2, BP#3), the rear high-pressure bearing (HP#2) and the rear low-pressure bearing (BP#2, BP#3) being housed in the same enclosure (C).

7. A turbojet engine (1) according to any one of claims 1 to 6, wherein a first and a second of said low-pressure bearings (BP#1, BP#4) are positioned between the fan bearings (S#1, S#2) and the high-pressure bearings (HP#1, HP#2).

8. A turbojet engine (1) according to any one of claims 1 to 7, wherein the low-pressure shaft (6) is supported by four low-pressure bearings (BP#1-BP#4), a first and a second of the low-pressure bearings (BP#1, BP#4) being positioned between the fan bearings (S#1, S#2) and the high-pressure bearings (HP#1, HP#2), while a third and a fourth of the low-pressure bearings (BP#2, BP#3) are positioned downstream of the high-pressure bearings (HP#1, HP#2), upstream and downstream being defined along a direction of gas flow in the turbojet engine (1).

9. A turbojet engine (1) according to any one of claims 1 to 8, having a bypass ratio greater than or equal to 10, preferably greater than or equal to 18, for example between 12 and 18.

10. A turbojet engine (1) according to any one of claims 1 to 9, wherein the reduction mechanism (10) comprises a planetary reduction mechanism (10) having a reduction ratio between 2.6 and 5.

11. A turbojet engine (1) according to any one of claims 1 to 10, wherein the fan bearings comprise a front bearing (S#1) and a rear bearing (S#2), the front bearing (S#1) comprising a roller bearing comprising an inner ring and a coaxial outer ring between which rollers are mounted while the rear bearing (S#2) comprises a ball bearing comprising an inner ring and a coaxial outer ring between which balls are mounted.

12. A turbojet engine according to any one of claims 1 to 11, wherein the fan bearings (S#1, S#2) and the reduction mechanism are housed in one and the same enclosure (A) associated with a scavenge pump.
